Europäisches Patentamt

European Patent Office

Office européen des brevets

(11) Publication number: **0 076 966**
**B1**

# (12) EUROPEAN PATENT SPECIFICATION

(45) Date of publication of patent specification: **30.12.86**

(51) Int. Cl.⁴: **B 29 C 65/04, B 65 B 51/10**

(21) Application number: **82108969.5**

(22) Date of filing: **28.09.82**

(54) **A method and an arrangement for the heat-sealing of packing laminate.**

(30) Priority: **08.10.81 SE 8105960**

(43) Date of publication of application:
**20.04.83 Bulletin 83/16**

(45) Publication of the grant of the patent:
**30.12.86 Bulletin 86/52**

(84) Designated Contracting States:
**AT BE CH DE FR GB IT LI LU NL SE**

(56) References cited:
**DE-B-1 221 785**
**FR-A-2 027 012**
**FR-A-2 230 484**
**GB-A- 978 815**
**GB-A-1 220 099**
**US-A-3 078 201**
**US-A-3 673 041**

(73) Proprietor: **TETRA PAK INTERNATIONAL AB**
**Fack 1701**
**S-221 01 Lund 1 (SE)**

(72) Inventor: **Cetrelli, Renato**
**Stenshögsvägen 9**
**S-222 48 Lund (SE)**

(74) Representative: **Müller, Hans-Jürgen, Dipl.-Ing.**
**et al**
**Müller, Schupfner & Gauger Lucile-Grahn-**
**Strasse 38 Postfach 80 13 69**
**D-8000 München 80 (DE)**

Courier Press, Leamington Spa, England.

## Description

The present invention relates to a method and to an apparatus for heat-sealing of packing materials, comprising an electrically conductive foil and an outer thermoplastic material layer, which consists in making the thermoplastic layers within a sealing zone of high pressure lie against one another and heating them temporarily to sealing temperature.

Packing containers of the non-returnable type are used for milk, fruit beverages etc. and are generally manufactured from laminated packing material. The packing material sometimes comprises a central, relatively stiff carrier layer of paper which is covered on either side by thin layers of homogeneous plastic material. The material may also comprise layers of aluminium foil or other material. It is a common feature of all packing laminates of this type that they comprise on the outside, at least on the side which is to face towards the packed contents, a layer of thermoplastic material, usually polyethylene, which makes it possible for two portions of the laminate resting against each other to be sealed together in a liquid-tight manner with the help of heat and pressure.

In order to obtain the desired strength and liquid-tightness of the seal it is necessary that the two thermoplastic layers which are sealed to one another should be clean and free of impurities. If this is the case a complete fusing together of the thermoplastic layers can take place, which results in an optimum seal from a point of view of strength as well as tightness. Since on the surface of the thermoplastic layers usually a thin oxide coating is present, which is formed in connection with the extrusion of the thermoplastic layers on the packing laminate, a complete fusing together of the thermoplastic layers is often prevented, so that the seal does not acquire the strength and tightness which theroretically is possible. Other types of impurities may also occur on the surface of the thermoplastic layer, e.g. residues of the contents, which further impair the seal. This is a particular problem in the type of package manufacture where the sealing of the laminate material takes place whilst the contents are present, that is to say where the contents in the first place have to be forced out from the space between the thermoplastic surfaces resting against one another before the sealing can take place. However, in practice the contents are not fully squeezed out, but small residues will remain embedded in the sealing area, and this will weaken the seal.

According to the FR—A—2 027 012 packing materials consisting of an aluminium foil and of a polypropylene layer are pressed together between two heating jaws which are heated, so that their heat is transferred by the metal foils to the plastic layers. Since the working surface of one of the heating jaws tapers from the sides of the jaw towards its center a high pressure is transferred from the jaw to the foil and layer in a central pressure region. The plastic layers are plastified in this region and the molten material is removed from it into adjoining regions by means of capillary forces in the gap between the two metal foils. However, the thin sheet of impurities is not sufficiently removed.

This disadvantages cannot be solved by a similar method according to US—A—3 078 201 and US—A—3 673 041 using rounded working surfaces of the heating jaws.

Many attempts have been made in order to overcome this problem, by e.g. FR—A—2 230 484. In this reference, the sealing jaws are separated into a central heating and two outer cooling parts. The heating part tapers towards the center or comprise a ridge in the center cooperating with a counter part of elastically resilient material like rubber. Between the central parts and the outer parts bulbs of plastic materials are formed but the impurities between the plastic sheets also hinder a good seal.

It is an object of the present invention to provide a method which will make it possible to heat-seal a packing laminate in such a manner that a better more durable seal can be obtained.

It is a further object of the present invention to provide a method and apparatus for heat-sealing of a packing laminate which will result in an optimum sela, even if the packing laminate is covered with impurities, e.g. oxides, residues of the contents of the package, dirt or the like.

These and other objects have been achieved in accordance with the invention by developing the method according to the preamble of claim 1 (FR—A—2 027 012) by the features mentioned in the characterising part of that claim. The package material used comprises a carrier layer of fibrous material like paper or cardboard. The heating is effected by electrically high-frequency heating of the electrically conductive foil of e.g. aluminium. Therefore, the plastic layers covering this foil are immediately and rapidly heated and plastified. The pressure in the central pressure region is abruptly decreased in the adjoining regions by especially a substantially rectangular cross-section of the heating jaw which must not be heated itself. Therefore, the plastified plastic material flows turbulently into the adjoining regions forming bulbs in which the impurities are collected as individual particles rather than a continuous film. Of course, the cross-section of the ridge of the jaw must not be exactly rectangular.

Preferred embodiments of the method and apparatus in accordance with the invention are claimed by sub-claims and/or described below.

It is a further object of the present invention to provide an apparatus for the heat-sealing of packing laminate, which is not subject to the disadvantages of arrangements known ealier and is more simple and reliable in its design. The apparatus should be capable, moreover, to be used in known types of packing machines and to be manufactured at low cost.

These and other objects have been achieved in accordance with the invention according to claim 4, in that the apparatus for the heat-sealing of packing material comprises an elongated sealing jaw with a working surface which can be pressed against the packing material in particular in the pressure region formed by a substantially linear ridge or elongated raised surface. The packing materials are pressed against one another with a very high pressure by the raised portion. Since the sealing jaw comprises a region heating the packing laminate, which includes not only the ridge or raised portion, but also an adjoining region, the heated thermoplastics will be forced at high speed from the pressure region to the adjoining region so that an effective blending and consequently a good seal is obtained in the manner described.

A preferred embodiment of the method as well as of the apparatus in accordance with the invention will now be described in more detail with special reference to the enclosed schematic drawing which only shows the components required for an understanding of the invention without limitations.

Fig. 1 shows in enlargement a cross-section through a packing material of a type which can be heat-sealed with the help of the invention;

Fig. 2 shows in enlargement a cross-section through a sealing jaw in accordance with the invention and

Fig. 3 is a section through the two packing laminates in accordance with Fig. 1 which are heat-sealed with the help of the invention.

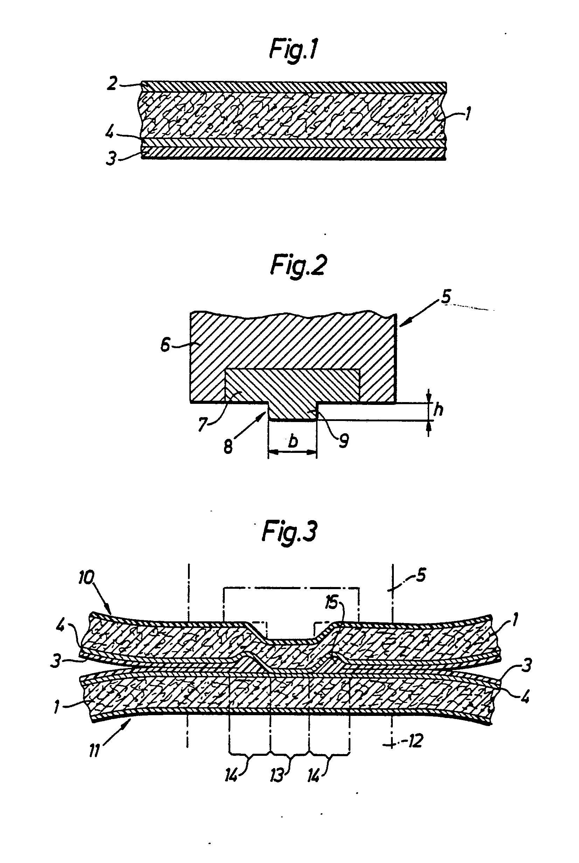

The packing material shown in Fig. 1 is of a type used for e.g. the packaging of milk and other beverages. The packing laminate has an overall thickness of 0,4—0,5 mm and comprises a central carrier layer 1 of fibrous material, this layer 1 being covered on either side by comparatively thin, homogeneous layers 2, 3 of thermoplastic material, in particular polyethylene. Between one outer plastic layer 3 and the carrier layer 1 a further layer 4 of aluminium foil is used. This layer of electrically conductive material is joined to the carrier layer 1 by means of thermoplastics (not shown) and completely covered by the outer homogeneous plastic layer 3. Thanks to the two outer thermoplastic layers 2, 3 the packing laminate can be simply heat-sealed by pressing together the parts which are to be sealed to one another with simultaneous heating of the thermoplastics to its melting temperature. It is of course also possible to seal packing laminates of other types with the help of the method and the apparatus in accordance with the invention.

Fig. 2 shows in section a cross-section through a sealing jaw 5 of an apparatus according to the invention. The sealing jaw 5 comprises a main body 6 which is made of an electrically non-conducting material and which is provided in one lateral surface with a groove into which a bar 7 of an electrically conducting material, preferably copper, is inserted. The bar 7 located centrally in the one lateral surface of the main body 6 forms (together with the surrounding parts of the main body 6) the working surface 8 of the sealing jaw 5. The working surface 8 is provided with a linear ridge 9 formed in the bar 7. The ridge 9 is of substantially rectangular cross-section and of a height which extends to 0,2 to 0,8 times the thickness of the laminate, but preferably 0,5 times the thickness of the laminate, and of a width which is substantially equal to the thickness of the packing laminate. The working surface 8 of the sealing jaw 5 thus comprises a centrally situated region heating the laminate which includes on the one hand the linear ridge 9 and on the other hand at least one adjoining region at the side of the ridge 9. The region heating the laminate is connected via the material in the bar 7 to a power source of the high-frequency type, so as to make possible the high-frequency welding.

The sealing jaw in accordance with the invention may be modified within the concept of the invention in different ways so as to meet requirements, which the sealing of different materials and different types of packing containers may make. A typical modification of this kind may be that the sealing jaw is provided with one or more ducts for a cooling medium, e.g. water, which prevents harmful rises in temperature or undesirable spreading of heat to the adjoining region which should remain unheated. It is also possible to install the sealing jaw in several, mutually movable parts. The portions of the sealing jaw situated on either side of the ridge 9, for example, may be made movable in relation to the ridge 9 and be spring-loaded in direction towards the material, so that a suitable contact pressure is automatically produced. The sealing jaw may also be doubled, that is so say it may comprise two main bodies of the type described arranged at a distance from each other. This embodiment is particularly suitable when a packing material tube is to be sealed off, that is to say sealed in two transverse zones and cut off between these, since a knife or some other appropriate cutting device can then operate in the space between the two main bodies of the sealing jaw.

Fig. 3 illustrates a sealing sequence in the sealing together of two packing laminates. Two packing materials 10, 11 (or two parts of the folded packing material) have been joined together in preparation of the sealing so that they lie against one another with their outer thermoplastic layers 3. The packing materials 10, 11 are pressed together with the help of a sealing jaw 5 and a counter-jaw 12 resting against the opposite side of the packing laminate (indicated by means of dash-dotted lines). The sealing jaw 5 is of the type as shown in Fig. 2 whilst the counter-jaw 12 is provided with a plane working surface resting against the laminate 11. The jaws 5, 12 are suspended in the frame (not shown) of the packing machine in such a manner that they can be given a reciprocating movement by means of hydraulic or mechanical driving devices, so that during the sealing they can be pressed together with a certain, adjustable force. When the jaws 5, 12 are moved towards one another and start to press together the packing materials 10, 11 situated in between, the bar 7 of the sealing jaw 5 is connected to a high-frequency power source. In this way an alternating field is induced in the aluminium foil 4 of the packing laminates, so that these are heated within a region corresponding to the surface of the bar 7 to a temperature which is appreciably higher than the melting temperature of the adjacent thermoplastic layers 3. The heat generated is transmitted directly to the thermoplastic layers 3 located between the aluminium layers so that these melt and become fluid. Owing to the high force of approx. 100 kg/cm² with which the packing laminate is pressed together on a level with the ridge 9, the molten thermoplastic will run or flow from the pressure region 13 of high pressure to adjoining regions 14 of the sealing zone. Since the thermoplastic layers 3 laying against one another in the region outside the sealing zone (13, 14) continue to be in solid state and are pressed against one another, the molten thermoplastics cannot flow any further outside the sealing zone, but remains in the two regions, namely in the pressure region 13 and in the adjoining region 14, where it forms bulges 15 running parallel with the elongated pressure region 13 wherein the two plastic layers sealed to one another are blended. In the pressure region 13 only insignificant amounts of plastic material remain which, because of unevenness of the surface etc., cannot be squeezed out, whilst the bulges 15 formed on either side of the region contain an excess of well-blended plastics providing a very strong and, in practice, unbreakable seal between the two layers. Since the flow from the pressure region 13 into the adjoining regions 14 is so rapid turbulence occurs in the flowing plastic material which ensures that the plastic material from the two layers resting against one another is well blended and mixed, so that any surface oxidation or other impurities present on the surface (e.g. from remaining residues of the contents of the packages) are effectively blended and mixed into the plastics, so that no coherent film of impurities impairing the strength of the seal will maintain.

To ensure further that the bulges 15 or accumulations of molten thermoplastics are of a limited, linear appearance, the parts of the two plastic laminates situated outside the sealing zone (13, 14) may be cooled. This can be achieved either by providing the two jaws 5, 12 with cooling ducts situated outside the sealing region through which liquid is conducted or, in the type of sealing performed with simultaneous forcing out of the contents, by allowing the contents to cool adjacent parts of the packing laminate.

To ensure an effective flow of molten thermoplastic material from the central pressure region 13 to the adjoining regions 14, the pressing of the raised ridge 9 against the packing laminate 10, 11 should take place with such a force that the surface pressure in the linear pressure region 13 of the sealing zone amounts to approx. 100 kg/cm² when the temperature of the thermoplastic layers 3 should exceed approx. 130°C.

## Claims

1. A method for heat sealing packing material comprising an electrically conductive foil (4) and at least a thermoplastic layer (2, 3) wherein the outer thermoplastic layers (3) of adjacent packing materials (10, 11) are pressed against each other and heated within a sealing zone in such manner that plastified material of the adjacent thermoplastic layers (3) flows away from a limited pressure region (13) of high pressure of the sealing zone into adjoining regions (14) of lower pressure and that the flow is stopped outside the adjoining regions (14) by non-molten material so that the plastified material accumulates and solidifies in the adjoining region, characterized in that packing materials (10, 11) further comprising a carrier layer (1) of fibrous material are used as the packing material, that the heating of the packing materials (10, 11) is created in the electrically conductive foils (4) by high frequency and that the packing materials (10, 11) are pressed in the pressure region (13) of high pressure by a ridge (9) of substantially rectangular cross-section.

2. A method as claimed in claim 1, characterized in that the outer thermoplastic layers (3) are cooled outside the adjoining region (14) of the sealing zone.

3. A method as claimed in claims 1 or 2, characterized in that the packing materials (10, 11) are compressed outside the adjoining region (14) of the sealing zone.

4. Apparatus for carrying out the method as claimed in one of the preceding claims, comprising a heating jaw (7) for heating outer thermoplastic layers (3), for pressing them together, characterized in that the heating jaw (7) has a ridge (9) of substantially rectangular cross-section forming a working surface for transferring the high pressure in the pressure region (13).

5. Apparatus as claimed in claim 4, characterized in that the width (b) of the ridge (9) is substantially equal to the order of the thickness of the packing materials (10, 11) and the height (h) thereof is between 0,2 and 0,8 times the thickness of the packing materials (10, 11).

6. Apparatus as claimed in claim 4 or 5, characterized in that the heating jaw (7) is formed as a bar of electrically conducting material inserted into a groove of the main body (6) of a sealing jaw (5) which main body (6) comprises electrically non-conducting material and forms outer working surfaces outside the adjoining region (14).

7. Apparatus as claimed in claim 6, characterized in that the outer working surfaces of the main body (6) form cooling surfaces.

## Revendications

1. Procédé pour souder par la chaleur une matière d'emballage comprenant une feuille électriquement conductible (4) et au moins une couche thermoplastique (2, 3), dans lequel les couches thermoplastiques extérieures (3) de matières d'emballage adjacentes (10, 11) sont pressées l'une contre l'autre et chauffées à l'intérieur d'une zone de soudure de telle manière que la matière plastifiée des couches thermoplastiques adjacentes (3) s'écoule à partir d'une région limitée sous pression (13) à pression élevée de la zone de soudure vers des régions adjacentes (14) à pression plus faible et que l'écoulement est arrêté à l'extérieur des régions adjacentes (14) par la matière non fondue de façon que la matière plastifiée s'accumule et se solidifie dans la région adjacente, caractérisé en ce que les matières d'emballage (10, 11) comprenant en outre une couche porteuse (1) de matière fibreuse sont utilisées comme matière d'emballage, que le chauffage des matières d'emballage (10, 11) est obtenu dans les feuilles électriquement conductibles (4) par haute fréquence et que les matières d'emballage (10, 11) sont pressées dans le région de pression (13) sous haute pression par une saillie (9) de section transversale pratiquement rectangulaire.

2. Procédé selon la revendication 1, caractérisé en ce que les couches thermoplastiques extérieures (3)sont refroidies à l'extérieur de la région adjacente (14) de la zone de soudure.

3. Procédé selon la revendication 1 ou 2, caracterisé en ce que les matières d'emballage (10, 11) sont comprimées à l'extérieur de la région adjacente (14) de la zone de soudure.

4. Dispositif pour appliquer le procédé selon l'une des revendications précédentes, comprenant une mâchoire chauffante (7) pour chauffer des couches thermoplastiques extérieures (3), pour les presser ensemble caractérisé en ce que la mâchoire chauffante (7) a une saillie (9) à coupe transversale pratiquement rectangulaire formant une surface de travail pour transférer la haute pression dans la région sous pression (13).

5. Dispositif selon la revendication 4, caractérisé en ce que la largeur (b) de la saillie (9) est pratiquement égale à l'ordre d'épaisseur des matières d'emballage (10, 11) et sa hauteur (h) est entre 0,2 et 0,8 fois l'épaisseur des matières d'emballage (10, 11).

6. Dispositif selon la revendication 4 ou 5, caractérisé en ce que la mâchoire chauffante (7) est formée comme une barre en matière électriquement conductrice insérée dans une rainure du corps principal (6) d'une mâchoire de soudure (5), ledit corps principal comprenant une matière électriquement non-conductrice et formant des surfaces de travail extérieures en dehors de la région adjacente (14).

7. Dispositif selon la revendication 6, caractérisé en ce que les surfaces de travail extérieures du corps principal (6) forment des surfaces refroidissantes.

## Patentansprüche

1. Verfahren zum Heißsiegeln von Packstoff, bestehend aus einer elektrisch leitenden Folie (4) und wenigstens einer Thermoplastschicht (2, 3), wobei die äußeren Thermoplastschichten (3) einander benachbarter Packstoffe (10, 11) gegeneinander gedrückt und innerhalb einer Siegelzone derart erwärmt werden, daß thermisch erweichtes Material der einander benachbarten Thermoplastschichten (3) aus einem begrenzten Druckbereich (13) hohen Drucks der Siegelzone in daran angrenzende Bereiche (14) niedrigeren Drucks fließt, und daß der Fluß außerhalb der angrenzenden Bereiche (14) durch nichtgeschmolzenes Material gestoppt wird, so daß sich das thermisch erweichte Material in dem angrenzenden Bereich ansammelt und erhärtet, dadurch gekennzeichnet, daß Packstoffe (10, 11), die ferner eine aus Faserstoff bestehende Trägerschicht (1) enthalten, als Packstoff eingesetzt werden, daß das Erwärmen der Packstoffe (10, 11) in den elektrisch leitenden Folien (4) durch Hochfrequenz erfolgt, und daß die Packstoffe (10, 11) in dem Druckbereich (13) hohen Drucks von einer Rippe (9) mit im wesentlichen Rechteckquerschnitt druckbeaufschlagt werden.

2. Verfahren nach Anspruch 1, dadurch gekennzeichnet, daß die äußeren Thermoplastschichten (3) außerhalb des angrenzenden Bereichs (14) der Siegelzone gekühlt werden.

3. Verfahren nach Anspruch 1 oder 2, dadurch gekennzeichnet, daß die Packstoffe (10, 11) außerhalb des angrenzenden Bereichs (14) der Siegelzone zusammengedrückt werden.

4. Vorrichtung zur Durchführung des Verfahrens nach einem der vorhergehenden Ansprüche, mit einer Heizbacke (7) zum Erwärmen der äußeren Thermoplastschichten (3) und Zusammenpressen derselben, dadurch gekennzeichnet, daß die Heizbacke (7) eine Rippe (9) mit im wesentlichen Rechteckquerschnitt aufweist, die eine Arbeitsfläche zur Übertragung des hohen Drucks im Druckbereich (13) bildet.

5. Vorrichtung nach Anspruch 4, dadurch gekennzeichnet, daß die Breite (b) der Rippe (9) im wesentlichen gleich der Dicke der Packstoffe (10, 11) ist und ihre Höhe (h) zwischen dem 0,2- und dem 0,8 fachen der Dicke der Packstoffe (10, 11) liegt.

6. Vorrichtung nach Anspruch 4 oder 5, dadurch gekennzeichnet, daß die Heizbacke (7) als Stab aus elektrisch leitendem Werkstoff geformt ist, der in eine Vertiefung des Hauptkörpers (6) einer Siegelbacke (5) eingesetzt ist, wobei der Hauptkörper (6) aus elektrisch nichtleitendem Werkstoff besteht und äußere Arbeitsflächen außerhalb des angrenzenden Bereichs (14) bildet.

7. Vorrichtung nach Anspruch 6, dadurch gekennzeichnet, daß die äußeren Arbeitsflächen des Hauptkörpers (6) Kühlflächen bilden.

*Fig.1*

*Fig.2*

*Fig.3*